# EUROPEAN PATENT APPLICATION

(11) **EP 4 549 378 A1**
(43) Date of publication of application: **07.05.2025**
(21) Application number: 23849877.8
(22) Date of filing: 18.07.2023
(51) Int. Cl.: C01B 21/22, C01B 21/40, B01D 53/56, B01D 53/72, B01D 53/92

(54) **GAS DECOMPOSITION METHOD AND GAS DECOMPOSITION DEVICE**

(30) Priority: 03.08.2022 JP 2022123739; 02.03.2023 JP 2023031729
(71) Applicant: Ushio Denki Kabushiki Kaisha, Tokyo 100-8150 (JP)
(72) Inventor: OTSUKA, Yuichi, Tokyo 100-8150 (JP); SAMEJIMA, Takanori, Tokyo 100-8150 (JP); AIURA, Yoshinori, Tokyo 100-8150 (JP); SHIMAMOTO, Akihiro, Tokyo 100-8150 (JP)
(74) Representative: Maiwald GmbH
(86) International application number: PCT/JP2023/026178
(87) International publication number: WO 2024/029318

(57) **Abstract**

Provided are a gas decomposition method and a gas decomposition device that are designed to efficiently decompose a greenhouse gas by a simpler way or structure.

The gas decomposition method includes irradiating a gas to be treated containing oxygen, dinitrogen monoxide, and a saturated hydrocarbon with first light having a main emission wavelength in a range of 160 nm or more and less than 200 nm to decompose the dinitrogen monoxide and the saturated hydrocarbon. The gas decomposition device includes a chamber to supply a gas to be treated containing oxygen, dinitrogen monoxide, and the saturated hydrocarbon and a first light source to irradiate the chamber with the first light.

## Description

### TECHNICAL FIELD

The present invention relates to a gas decomposition method and a gas decomposition device.

### BACKGROUND ART

Since the average global temperature has been rising after the Industrial Revolution, taking measures against global warming is an urgent issue. It is known that greenhouse gases responsible for global warming include carbon dioxide, methane, dinitrogen monoxide, and chlorofluorocarbon gas. Among these gases, carbon dioxide emissions are the largest, followed by methane emissions and then dinitrogen monoxide emissions. However, it is reported that the global warming potential of methane is 25 times that of carbon dioxide and the global warming potential of dinitrogen monoxide is 298 times that of carbon dioxide. In particular, impact of dinitrogen monoxide emissions on global warming cannot be ignored.

Great quantities of dinitrogen monoxide are discharged from industrial activities such as manufacturing of chemical products and combustion of waste as well as from human and livestock animal excreta treatment processes and agriculture. Methane is often discharged from the same sites as those for dinitrogen monoxide, such as agricultural land and places for livestock waste, biomass combustion, and sewage treatment. A reason why dinitrogen monoxide and methane are discharged from the same sites is that both gases are generated due to microorganisms in many cases. Since concentrations of dinitrogen monoxide and methane have recently been on the rise, suppressing a rise in or reducing concentrations of dinitrogen monoxide and methane is expected as a measure against global warming.

In the sites where dinitrogen monoxide and methane are discharged, air makes up most of a composition of the discharged gas, and dinitrogen monoxide and methane often account for relatively low concentrations in the composition of the discharged gas. As methods for decomposing dinitrogen monoxide, a high temperature combustion technique and a catalyst technique have been used since past time. However, burning a gas by the high temperature combustion technique needs a large amount of energy. If a large amount of energy is secured using a fossil fuel, carbon dioxide emissions increase, and thus this technique is not an efficient method against global warming. The catalyst technique also requires heating a gas to a high temperature. In addition, ammonia needs to be procured for use in a catalyst or a reducing agent, and treating wastewater after decomposition processing is a challenge. As a result, the catalyst technique is not efficient either. As methods for decomposing methane, a high temperature combustion technique and a catalyst technique are known. However, challenges as described above exist. Another method of decomposition is a plasma technique. Unfortunately, if both a gas containing a nitrogen atom, such as nitrogen or dinitrogen monoxide, and a gas containing an oxygen atom, such as oxygen, are contained in a gas to be treated, NOx and dinitrogen monoxide, which are environmental contaminants, are generated in large quantities by plasma. This limits a composition of the gas to be treated.

As a new method for decomposing dinitrogen monoxide, a method of decomposing dinitrogen monoxide by ultraviolet irradiation is known. For example, in Patent Document 1, an engine exhaust purification system capable of decomposing dinitrogen monoxide is described. The system, which is designed to decompose and remove dinitrogen monoxide by ultraviolet light of 172 nm after oxidizing a hydrocarbon and CO in exhaust gas from an engine, removing NOx, and removing water vapor, is described.

### PRIOR ART DOCUMENT

### PATENT DOCUMENT

Patent Document 1: JP-A-2021-088964

### SUMMARY OF THE INVENTION

### PROBLEMS TO BE SOLVED BY THE INVENTION

A method for dinitrogen monoxide purification disclosed in Patent Document 1 presents a very complicated structure and is not efficient. Hence, the present invention provides a gas decomposition method and a gas decomposition device that are designed to efficiently decompose a greenhouse gas by a simpler way or structure.

### MEANS FOR SOLVING THE PROBLEMS

A gas decomposition method according to the present invention includes irradiating a gas to be treated containing oxygen, dinitrogen monoxide, and a saturated hydrocarbon with first light having a main emission wavelength in a range of 160 nm or more and less than 200 nm to decompose the dinitrogen monoxide and the saturated hydrocarbon.

In the present specification, "oxygen" simply referred to as "oxygen" represents an "oxygen molecule" (hereinafter sometimes referred to as "O₂"). The saturated hydrocarbon may be a type of hydrocarbon or two or more types of hydrocarbons. Although details will be described later, the first light serves to directly decompose dinitrogen monoxide (hereinafter sometimes referred to as "N₂O"), and an excited oxygen atom (sometimes referred to as "singlet oxygen" or "O(¹D)"; hereinafter sometimes referred to as "O(¹D)") generated by irradiation with the first light serves to decompose N₂O. O(¹D) generated by irradiation with the first light and an oxygen atom in a ground state (sometimes referred to as "triplet oxygen" or "O(³P)"; hereinafter sometimes referred to as "O(³P)") serve to decompose the hydrocarbon. Consequently, both N₂O and the hydrocarbon can be decomposed by the first light. Water (H₂O) generated by decomposition reaction of the hydrocarbon promotes nitration of NOx generated by the decomposition of N₂O. Since NOx is a substance that adversely impacts a human body and animals, it is preferable to reduce NOx from an environmental preservation perspective. Further, O(¹D) generated by the decomposition of N₂O contributes to the decomposition of the hydrocarbon. In this respect, it is preferable to decompose a hydrocarbon concurrently with the decomposition of N₂O.

Through nitration of NOx, nitric acid (hereinafter sometimes referred to as "HNO₃") is obtained. Since nitric acid is a useful substance in various industrial sectors, nitric acid is produced on an industrial scale using a large amount of energy. In contrast to this, the gas decomposition method enables generation of nitric acid without a large amount of energy. This produces a secondary effect by allowing generated nitric acid to be collected and used.

The saturated hydrocarbon may be an alkane. The alkane may have 10 or less, 6 or less, or 4 or less carbon atoms.

A temperature of the gas to be treated being irradiated with the first light may be higher than the temperature of the gas to be treated before being collected. In other words, the collected gas to be treated may be heated. As methods of heating, there are a method using heat energy from at least one of a first light source and a second light source describe later or using heat of reaction from each chemical reaction and a method using a heater for heating the gas to be treated.

The gas to be treated may contain water (H₂O). In the present specification, water conceptually includes water vapor as a gas and water mist as a liquid. Although details will be described later, if the gas to be treated contains water, water (H₂O) is photolyzed by the first light or irradiation with the first light to generate a hydroxy radical (hereinafter sometimes referred to as "OH"). The hydroxy radical promotes decomposition of the hydrocarbon. As described above, water promotes nitration of NOx generated by the decomposition of N₂O.

The alkane may primarily contain methane. As described above, similarly to N₂O, methane is one of greenhouse gases. The present inventors have found that dinitrogen monoxide and methane, two types of greenhouse gases, can be simultaneously reduced by irradiation with the first light. A hydrocarbon that primarily contains methane refers to a hydrocarbon having a largest methane gas concentration (vol%) among alkane hydrocarbons having 4 or less carbon atoms.

Although details will be described later, a combination of dinitrogen monoxide and methane is discharged, despite relatively low concentrations, from a sewer or a septic tank, or a biomass plant or a waste treatment plant. Kinds of waste that contain raw garbage or human and livestock animal excreta often contain a hydrocarbon and ammonia. Thus, in general, when these kinds of waste become rotten, both dinitrogen monoxide derived from ammonia and methane derived from a hydrocarbon are generated. This allows both dinitrogen monoxide and methane to be procured from a common location. Dinitrogen monoxide and methane may be procured from different locations.

The methane may occupy 20 vol% or more with respect to the dinitrogen monoxide. If a ratio of methane to dinitrogen monoxide is relatively high, a higher amount of water is generated from hydrogen and oxygen derived from the methane. This makes it possible to promote nitration of NOx, which is generated as a by-product of the decomposition of N₂O, and consequently reduce an amount of NOx, a harmful substance.

The gas to be treated may be irradiated with second light having a main emission wavelength in a range of 200 nm or more and less than 1180 nm. In other words, by the irradiation with the second light having a wavelength longer than that of the first light, O(¹D) or O(³P) is generated from ozone (hereinafter sometimes referred to as "O₃") secondarily generated by irradiation with the first light. O(¹D) is used to decompose N₂O, decompose the hydrocarbon, and generate a hydroxy radical. O(³P) is used to nitrate NOx and decompose the hydrocarbon.

The second light may have a main emission wavelength in a range of 780 nm or more and less than 1180 nm. In other words, the second light may primarily contain infrared light. The infrared light helps to increase the temperature of the gas to be treated and promote the decomposition of the hydrocarbon.

Nitric acid may be generated from the decomposed gas to be treated.

A gas decomposition device according to the present invention includes: a chamber to supply a gas to be treated containing oxygen, dinitrogen monoxide, and a saturated hydrocarbon; and a first light source to irradiate the chamber with first light having a main emission wavelength in a range of 160 nm or more and less than 200 nm. The gas decomposition device decomposes the dinitrogen monoxide and the saturated hydrocarbon.

The chamber may include an inside chamber located inside the first light source and an outside chamber disposed so as to surround the first light source. In the present specification, the "chamber" simply presented as-is (including a case where the term is presented together with a reference sign) refers to an outside chamber disposed so as to surround the first light source. In the present specification, for a description of the inside chamber located inside the first light source, an "inside chamber" is presented, or a chamber disposed inside a light source is stated.

The saturated hydrocarbon may be an alkane. The alkane may have 10 or less, 6 or less, or 4 or less carbon atoms.

The chamber may have a connection port connected to a space in which a gas containing 5 vol% or less of the dinitrogen monoxide and 5 vol% or less of an alkane having 4 or less carbon atoms is present. The "space in which a gas containing 5 vol% or less of the dinitrogen monoxide and 5 vol% or less of an alkane having 4 or less carbon atoms is present" is, for example, a sewer or a septic tank, or a drainage pipe, a drainage tank, an exhaust pipe, and an exhaust tank of a biomass plant or a waste treatment plant. Even in a case where dinitrogen monoxide and the alkane each have a low concentration of 1% or less, decomposition of the dinitrogen monoxide and the alkane is possible. Even in a case where at least one of the concentration of dinitrogen monoxide and the concentration of the alkane is more than 5 vol%, decomposition of the dinitrogen monoxide and the alkane is possible.

The chamber may be an outside chamber surrounding the first light source, and the gas decomposition device may supply the gas to be treated to the outside chamber.

The gas to be treated supplied to the outside chamber may not come into contact with the first light source. A gap between the outside chamber and the first light source may be filled with a gas (such as nitrogen gas acting as an inert gas) that is less likely to be absorbed by the first light.

The gas decomposition device may include a second light source external to the outside chamber to irradiate the gas to be treated with light having a main emission wavelength in a range of 200 nm or more and less than 1180 nm, the gas to be treated being located between the outside chamber and the first light source.

The chamber may be an inside chamber located inside the first light source, and the gas decomposition device may supply the gas to be treated to an interior of the inside chamber.

The chamber may include both an inside chamber located inside the first light source and an outside chamber surrounding the first light source, and the gas decomposition device may supply the gas to be treated to an interior of the inside chamber and a space between the outside chamber and the first light source.

The gas to be treated may pass through one of the interior of the inside chamber and the space between the outside chamber and the first light source, and may subsequently pass through an other of the interior of the inside chamber and the space between the outside chamber and the first light source.

The gas decomposition device may include a light guide in an internal space of the chamber, the light guide being configured to transmit light reaching the chamber. The light guide may have a pillar shape or a plate shape.

The gas decomposition device may include a gap between the light guide and the first light source. The gas decomposition device may not include a gap between the light guide and the first light source.

The first light source may be an excimer lamp. A main wavelength of light from the excimer lamp may be 172 nm or near 172 nm. Such excimer light is obtained by turning on a xenon excimer lamp in which xenon gas is sealed in an arc tube. The excimer lamp is a light source that can be stably mass-produced, and has a high cost reduction effect. Electric power supplied to the excimer lamp is controlled by a controller. The controller controls turning on and off of the excimer lamp.

In the present specification, "near 172 nm" refers to a region in the range of 172 nm ±5 nm. In this specification, on condition that a wavelength range Z(λ) of ±10 nm with respect to a certain wavelength λ is defined on an emission spectrum, the "main wavelength" indicates a wavelength λi in a wavelength range Z(λi) showing integrated intensity of 40% or more with respect to the total integrated intensity in the emission spectrum. When the light source that emits light having the "main wavelength" is a xenon excimer lamp or such a light source having an extremely narrow half-value width and showing high light intensity only at specific wavelengths, a wavelength representing the highest relative light intensity (peak wavelength) may be usually regarded as the main wavelength.

### EFFECT OF THE INVENTION

The technique described above makes it possible to provide a gas decomposition method and a gas decomposition device that are designed to efficiently decompose a greenhouse gas by a simpler way or structure. The provision of such a gas decomposition method and gas decomposition device greatly contributes to Goal 13 "Take urgent action to combat climate change and its impacts" of the Sustainable Development Target (SDGs) led by the United Nations.

### BRIEF DESCRIPTION OF THE DRAWINGS

Fig. 1A is a diagram showing a first embodiment of a gas decomposition device.
Fig. 1B is a cross-sectional view taken along line S1-S1 of Fig. 1A.
Fig. 2 is a diagram showing an example of a method for treating nitric acid.
Fig. 3 is a graph showing a relationship between methane gas temperature and reaction rate constant.
Fig. 4A is a graph showing a relationship between a ratio of CH₄ to N₂O and an amount of NOx generated.
Fig. 4B is a graph showing a relationship between a ratio of CH₄ to N₂O and an amount of NOx generated.
Fig. 5A is a diagram showing a first modification of the first embodiment.
Fig. 5B is a cross-sectional view taken along line S2-S2 of Fig. 5A.
Fig. 6A is a diagram showing a second modification of the first embodiment.
Fig. 6B is a cross-sectional view taken along line S3-S3 of Fig. 6A.
Fig. 7A is a diagram showing a second modification of the first embodiment.
Fig. 7B is a cross-sectional view taken along line S4-S4 of Fig. 7A.
Fig. 8A is a diagram showing a second embodiment.
Fig. 8B is a cross-sectional view taken along line S5-S5 of Fig. 8A.
Fig. 9A is a diagram showing a third embodiment.
Fig. 9B is a cross-sectional view taken along line S6-S6 of Fig. 9A.
Fig. 10 is a diagram showing a first modification of the third embodiment.
Fig. 11 is a diagram showing a second modification of the third embodiment.
Fig. 12A is a diagram showing a fourth embodiment.
Fig. 12B is an enlarged view of a principal part of Fig. 12A.
Fig. 12C is a top view of a light guide.
Fig. 13 is a diagram showing experimental equipment.

### MODE FOR CARRYING OUT THE INVENTION

Embodiments of the present invention will be described with reference to the drawings as appropriate. Note that all the drawings other than graphs are schematically illustrated, the dimensional ratios in the drawings do not necessarily coincide with the actual dimensional ratios, and the dimensional ratios do not necessarily coincide between the drawings.

### <First embodiment>

### [Outline of gas decomposition device]

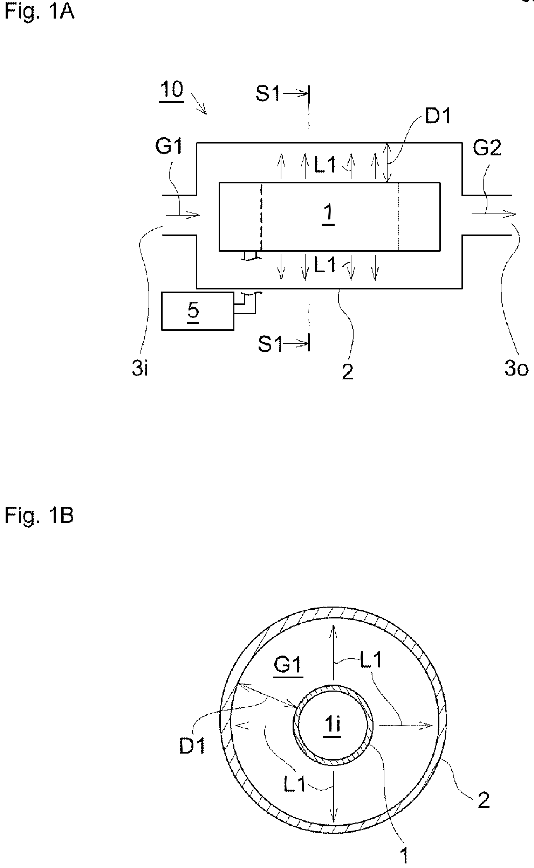

Fig. 1A is a diagram showing a first embodiment of a gas decomposition device. Fig. 1B is a cross-sectional view taken along line S1-S1 of Fig. 1A. A gas decomposition device 10 includes a chamber 2 and a first light source 1 disposed in the chamber 2 to emit first light L1 having a main emission wavelength in a range of 160 nm or more and less than 200 nm. The chamber 2 includes a gas supply port 3i and a gas discharge port 3o. The gas supply port 3i and the gas discharge port 3o are disposed opposite to each other through the first light source 1. In the present specification, the first light L1 emitted from the first light source 1 is indicated, for example, by solid arrows directed outward from the first light source 1.

The gas decomposition device continues to supply a gas G1 from the gas supply port 3i into the chamber 2, irradiate the gas G1, a gas to be treated, with the first light L1 emitted from the first light source 1, and discharge a gas G2 produced after irradiation with the light from the gas discharge port 3o. This allows N₂O and a hydrocarbon in the gas G1 to be continuously decomposed. The first light source 1 is electrically connected to a controller 5. With electric power supplied from the controller 5 to the first light source 1, the first light source 1 is lit.

In the preset embodiment, the first light source 1 is a xenon excimer lamp that emits excimer light having a peak wavelength of 172 nm. In the xenon excimer lamp of the present embodiment, xenon gas is sealed in an inside 1i (refer to Fig. 1B) of an arc tube. The arc tube of the present embodiment has a cylindrical shape. However, a shape of the arc tube is not limited to the cylindrical shape. The first light source 1 is not limited to the excimer lamp, but may be, for example, a low-pressure mercury lamp. The first light source 1 may be an excimer lamp in which a gas other than xenon is sealed. The first light source 1 may be a solid state light source such as a light-emitting diode (LED) or a laser diode (LD).

The first light L1 is readily absorbed into the gas G1 and does not carry a long way. Thus, a space D1 between a surface of the arc tube of the first light source 1 and an inner wall of the chamber 2 (refer to Fig. 1A or Fig. 1B) is relatively narrow. The space D1 may be, for example, 50 mm or less and is preferably 30 mm or less. With the space D1 set at an appropriate distance such that the light is not too attenuated, the gas decomposition device can reduce the gas G1 that passes through the chamber 2 without being irradiated with the first light L1.

### [Gas to be treated]

The gas to be treated will be described. The gas G1, a gas to be treated, contains oxygen, N₂O, and a saturated hydrocarbon, particularly an alkane having 10 or less, 6 or less, or 4 or less carbon atoms.

The oxygen contained in the gas G1 may be oxygen in air. In other words, the gas G1 may contain air. The gas G1 containing air inevitably contains nitrogen and a small amount of carbon dioxide. The gas G1 may contain water.

If the saturated hydrocarbon is an alkane having 4 or less carbon atoms, examples of the alkane having 4 or less carbon atoms include methane (hereinafter sometimes referred to as "CH₄"), ethane (C₂H₆), propane (C₃H₈), and butane (C₄H₁₀). The "alkane having 4 or less carbon atoms" may contain a type of hydrocarbon or two or more types of hydrocarbons. Among these hydrocarbons, CH₄ is a greenhouse gas that has a higher global warming potential than that of carbon dioxide.
When the gas to be treated contains both N₂O and CH₄, two types of the greenhouse gases can be reduced simultaneously.

### [N₂O decomposition mechanism]

A mechanism for decomposing N₂O by ultraviolet light will be described. A method of decomposing N₂O is made up of direct decomposition by ultraviolet light and indirect decomposition with O(¹D) generated by ultraviolet light.

Direct decomposition of N₂O will be described. When N₂O is irradiated with ultraviolet light hv at a wavelength of 340 nm or less (≤ 340 nm), N₂O is decomposed, and N₂ and O(¹D) are generated. This is represented by the formula (1):

N₂O + hv (≤ 340 nm) → N₂ + O (¹D) ... (1)

The decomposition reaction of the formula (1) occurs in theory by ultraviolet light having a wavelength of 340 nm or less. However, an absorption cross section of N₂O for the light having a wavelength of 200 nm or more is small. Thus, using the light having a wavelength of less than 200 nm, for which the absorption cross section is relatively large, is more efficient in promoting the decomposition reaction of the formula (1).

Next, indirect decomposition of N₂O will be described. O(¹D) is a highly active agent that has high reactivity. When O(¹D) generated by ultraviolet light comes into contact with N₂O, an oxygen molecule and a nitrogen molecule are generated by the formula (2), or nitrogen monoxide (hereinafter sometimes referred to as "NO") is generated by the formula (3).

N₂O + O (¹D) → Oz + N₂ ... (2)

N₂O + O (¹D) → NO + NO ... (3)

O(¹D) necessary for reactions by the formulas (2) and (3) is generated by the formula (1) as well as the following formulas (4) and (5). "hv (≤ 175 nm)" represents ultraviolet light having a wavelength of 175 nm or less, and "hv (≤ 411 nm)" represents ultraviolet light having a wavelength of 411 nm or less.

O₂ + hv (≤ 175 nm) → O (³P) + O (¹D) ... (4)

O₃ + hv (≤ 411 nm) → O (¹D) + O₂ ... (5)

O₃ necessary for a reaction by the formula (5) is generated through reactions represented by the following formulas (1), (4), (6), (7), (8) (the formulas (1) and (4) are described again). The formula (6) shows that a reaction represented by the formula (6) occurs if the wavelength of the ultraviolet hv is 242 nm or less. "M" included in the formulas (7) and (8) indicates a third body.

N₂O + hv (≤ 340 nm) → N₂ + O (¹D) ... (1)

O₂ + hv (≤ 175 nm) → O (³P) + O (¹D) ... (4)

O₂ + hv (≤ 242 nm) → O (³P) + O (³P) ... (6)

O(¹D) + M → O (³P) + M ... (7)

O₂ + O (³P) + M → O₃ + M ... (8)

Direct decomposition of N₂O by the ultraviolet light hv and indirect decomposition of N₂O with O(¹D) generated by the ultraviolet light have been described above. In general, both direct decomposition and indirect decomposition are conducted. A ratio of occurrence of direct decomposition to occurrence of indirect decomposition differs depending on a gas composition of the gas G1.

Meanwhile, a series of the reactions descried above generates a by-product. NO generated through the reaction by the formula (3) causes a reaction as described below in the chamber 2. This reaction is represented by the following formulas (9) to (14).

NO + O (³P) → NO₂ ... (9)

NO + O₃ + M → NO₂ + O₂ + M ... (10)

NO₂ + O (³P) + M → NO₃ + M ... (11)

NO₂ + 0₃ + M → NO₃ + Oz + M ... (12)

NO₃ + NO₂ → N₂O₅ ... (13)

N₂O₅ + H₂O → HNO₃ + HNO₃ ... (14)

NO is converted into nitrogen dioxide (hereinafter sometimes referred to as "NO₂") by any of the formulas (9) and (10). When O₃ and H₂O are satisfactorily present in the chamber 2, NO₂ is converted into nitric acid (HNO₃) via NO₃ and N₂O₅ by the formulas (11) to (14). If O₃ and H₂O are not satisfactorily present in the chamber, reactions by the formulas (12) and (14) do not occur satisfactorily and conversion to nitric acid does not occur. Occurrence of a NOx cycle reaction causes O₃ to be consumed and O₃ can be depleted. In this case, NOx remains behind.

### [NOx cycle reaction]

The NOx cycle reaction will be described. In the present specification, NOx conceptually includes NO and NO₂. NO is converted into NO₂ by any of the formulas (9) and (10) described again below. Meanwhile, NO₂ reacts with an oxygen atom O to generate NO by the following formula (15). The oxygen atom O included in the formula (15) includes both O(¹D) and O(³P).

NO + O (³P) → NO₂ ... (9)

NO + O₃ + M → NO₂ + O₂ + M ... (10)

NO₂ + O → NO + O₂ ... (15)

The reaction particularly by the formula (10) to generate NO₂ from NO and the reaction by the formula (15) to generate NO from NO₂ can be repeated. This refers to the NOx cycle reaction. In a process of the NOx cycle reaction, oxygen atoms O necessary for decomposition of N₂O and the hydrocarbon and O₃ necessary for generation of O(¹D) (refer to the formula (5)) continue to be consumed. Thus, occurrence of the NOx cycle reaction causes the oxygen atoms O and O₃ to disappear and hinders the decomposition of N₂O and the hydrocarbon.

NOx adversely impacts a human body and animals. Hence, it is desirable to create an environment where O₃ and H₂O are satisfactorily present in the chamber and promote the reaction for generating nitric acid (HNO₃) from NOx. Oz and H₂O need to be present in a space irradiated with the light to make O₃ and H₂O be satisfactorily present. In other words, a large amount of O₂ needs to be contained in the gas G1, a gas to be treated. A method of making H₂O be satisfactorily present is a method of making the gas G1 contain the hydrocarbon. Although details will be described later, a chemical reaction between the hydrocarbon and hydroxyl radicals contributes to the generation of H₂O. It is also preferable to make the gas G1 contain H₂O.

### [Method for treating nitric acid]

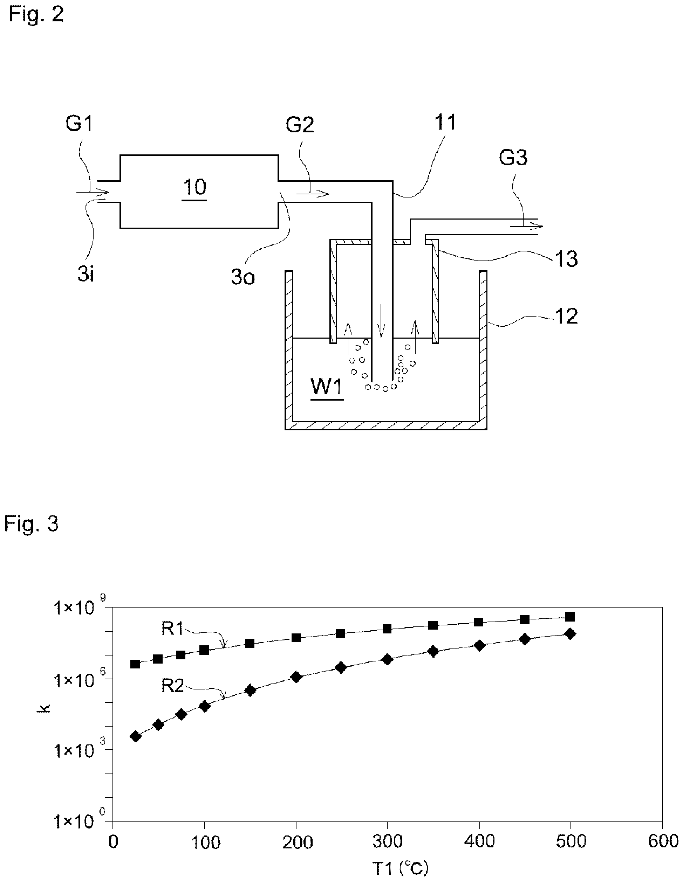

Fig. 2 shows an example of a method for treating nitric acid. In Fig. 2, a gas G2 containing nitric acid generated by the gas decomposition device 10 is discharged from the chamber 2. The gas G2 passes through a discharge pipe 11 connected to the gas discharge port 3o and comes into contact with water W1 in a container 12. The nitric acid contained in the gas G2 is thereby dissolved in the water W1, resulting in an aqueous solution of nitric acid. This consequently allows the nitric acid to be trapped. Nitric acid is a raw material for ammonium nitrate and is a useful substance in such a field as the chemical industry and agricultural sector. Thus, the aqueous solution of nitric acid may be collected from the container 12. If a concentration of the aqueous solution of nitric acid is low to such a degree that the aqueous solution is permitted to be drained, the aqueous solution may be poured into a sewer without being collected. The nitric acid poured into the sewer is eventually converted into N₂ via NO₃⁻ by biodegradation. In Fig. 2, a method of making the nitric acid be dissolved into the water W1 and collecting the aqueous solution is described. However, a method may include simply cooling the gas G2 to liquefy the nitric acid and collecting the liquefied nitric acid. Nitric acid has a boiling point of about 83°C, and thus when the gas is cooled, the nitric acid is liquefied from the gas.

### [Gas decomposition mechanism for saturated hydrocarbon]

A mechanism for decomposing a saturated hydrocarbon by ultraviolet light will be described. A case in which the saturated hydrocarbon is CH₄ will be described below. However, saturated hydrocarbons other than CH₄ can be described in the same way as below.

CH₄ is decomposed through chemical reactions represented by the following formulas (16) to (19).

CH₄ + O (¹D) → CH₃ + OH ... (16)

CH₄ + O (¹D) → CH₂O + H₂ ... (17)

CH₄ + O (³P) → CH₃ + OH ... (18)

CH₄ + OH - CH₃ + H₂O ... (19)

O(¹D) and O(³P) are each generated by the formula (1), (4), (5), (6), or (7) described above. OH used in the formula (19) is generated by the formulas (16) and (18) as well as the following formulas (20) and (21).

H₂O + hv (≤ 242 nm) → H + OH ... (20)

H₂O + O (¹D) → OH + OH ... (21)

Thus, CH₄ is decomposed by O('D), O(³P), or OH generated by irradiation with ultraviolet light. O(¹D) generated by irradiation with ultraviolet light is used to both decompose N₂O and decompose CH₄. This makes it possible to simultaneously perform the processes of decomposition. Further, as shown with the formula (1), O(¹D) obtained by decomposition of N₂O can be used to decompose CH₄. Performing the process of decomposition of CH₄ simultaneously with the process of decomposition of N₂O enables efficient decomposition. This is one of advantageous characteristics of cases in which CH₄ is mainly contained as a saturated hydrocarbon.

### [Temperature dependence of hydrocarbon decomposition reaction]

Out of CH₄ decomposition reactions, reactions by the formulas (18) and (19) described again below depend on temperature. Fig. 3 is a graph showing a relationship between methane gas temperature T1 and reaction rate constant k. In Fig. 3, an R1 curve represents a reaction rate constant k (m³/kmol s) with respect to a temperature T1 (°C) for the formula (19). In Fig. 3, an R2 curve represents a reaction rate constant k (m³/kmol s) with respect to a temperature T1 (°C) for the formula (18). The R1 and R2 curves illustrate that both the reactions by the formulas (18) and (19) increase in reactivity with a rise in temperature.

CH₄ + O (³P) → CH₃ + OH ... (18)

CH₄ + OH → CH₃ + H₂O ... (19)

Further, a rise in temperature causes an amount of O(³P) generated by the formula (7) described again below to increase. This incremental phenomenon results from decomposition of ozone by heat. The increased O(³P) promotes the CH₄ decomposition reaction by the formula (18) described again below.

O (¹D) + M → O (³P) + M ... (7)

CH₄ + O (³P) → CH₃ + OH ... (18)

In the present embodiment, the first light source 1 is disposed in the chamber 2. The first light source 1 is lit, and emits ultraviolet light and generates heat. Hence, the first light source 1 heats the gas around the first light source 1, increases temperature of the gas G1 containing CH₄, and promotes the CH₄ decomposition reactions by the above formulas (18) and (19). In addition, the formulas (2), (3), (9), and (10) represent exothermic reaction and increase the temperature of the gas G1. Thus, performing the process of decomposition of CH₄ simultaneously with the process of decomposition of N₂O enables efficient decomposition. In the same way as CH₄, decomposition reactions of saturated hydrocarbons other than CH₄ have dependence on temperature.

### [Mixing ratio of hydrocarbon and dinitrogen monoxide]

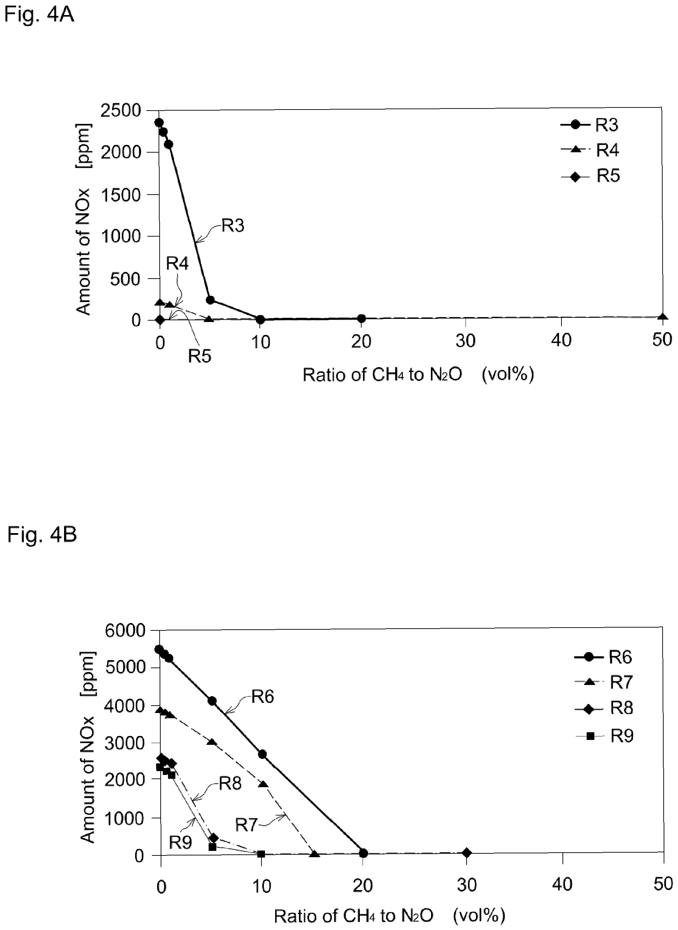

Fig. 4A shows a result determined by a simulation, representing a relationship between a ratio of CH₄ to N₂O and an amount of NOx generated. The "ratio of CH₄ to N₂O" is indicated by a percentage (unit: vol%) representing the ratio of a volume of CH₄ to a volume of N₂O contained in the gas to be treated. The "amount of NOx generated" represents a sum of an amount of NO generated and an amount of NO₂ generated. R3 to R5 curves differ in N₂O content. For the R3 curve, the N₂O content is 10000 ppm. For the R4 curve, the N₂O content is 1000 ppm. For the R5 curve, the N₂O content is 100 ppm. For the R3 to R5 curves, the temperature of the gas G1 in the chamber 2 is standardized at 500 K. In Fig. 4A, plots at places where two or more plots overlap or are adjacent to each other are partially omitted to improve graph legibility. All the R3 to R5 curves are simulated at a common rate across the horizontal axis. The partially omitted plots should be read as being present on the curves.

Preferably, the amount of NOx generated is low. Fig. 4A indicates that the amount of NOx generated decreases with an increase in the ratio of CH₄ to N₂O regardless of the N₂O amount. The graph shows that NOx is not generated when 10 vol% or more CH₄ is present relative to N₂O. This is due to satisfactory supply of the hydrocarbon and consequent nitration of NOx by H₂O generated by decomposition of the hydrocarbon.

Fig. 4B shows a result determined by a simulation, representing a relationship between a ratio of CH₄ to N₂O and an amount of NOx generated. Definitions of the "ratio of CH₄ to N₂O" and the "amount of NOx generated" are the same as those in Fig. 4A. R6 to R9 curves differ in temperature of the gas G1 inside the chamber 2. For the R6 curve, the temperature is 350 K. For the R7 curve, the temperature is 400 K. For the R8 curve, the temperature is 450 K. For the R9 curve, the temperature is 500 K. For the R6 to R9 curves, a flow rate of N₂O is standardized at 10,000 ppm.

Fig. 4B indicates that the amount of NOx generated decreases with an increase in temperature inside the chamber 2. It is also indicated that the amount of NOx generated decreases with an increase in the ratio of CH₄ to N₂O. The graph shows that NOx is not generated even with a temperature of 350 K when 20 vol% or more CH₄ is present relative to N₂O. This result is due to satisfactory supply of the hydrocarbon resulting from a high temperature or a high ratio of CH₄ and consequent nitration of NOx by H₂O generated by decomposition of the hydrocarbon.

According to Figs. 4A and 4B, it is preferable that the ratio of CH₄ to N₂O be 20 vol% or more. A ratio of 20 vol% or more readily causes the amount of NOx generated to decrease. In Fig. 4A, a simulation was performed with the N₂O content ranging from 100 ppm to 10,000 ppm and corresponding amounts of CH₄, whereas, in Fig. 4B, a simulation was performed with the 10,000 ppm N₂O content and a corresponding amount of CH₄. However, even N₂O of less content (e.g., less than 100 ppm) and a corresponding amount of CH₄ can produce similar effects. Even a saturated hydrocarbon other than CH₄ can produce similar effects.

### [Method of using gas decomposition device]

A method of using the gas decomposition device 10 will be described. Dinitrogen monoxide is discharged from human and animal excreta, agricultural and livestock farms, as well as through a process of fermenting biomass or raw garbage by microorganisms. On the other hand, methane is produced by anaerobic methanogen, which exists in places such as digestive organs in animals, bogland, marine sediment, and the earth's crust. Thus, both dinitrogen monoxide and methane exist, as described above, in places such as a sewer or a septic tank, or a drainage pipe, a drainage tank, an exhaust pipe, and an exhaust tank of a biomass plant or a waste treatment plant. Microorganisms also release oxygen dioxide. However, in the case of a sewer or a septic tank, oxygen having a concentration close to the concentration in the air (about 21 vol%) and a large amount of water are contained by the treatment of aerating with a large amount of air.

Therefore, the gas supply port 3i of the gas decomposition device 10 is connected to a sewer or a septic tank, or a drainage pipe, a drainage tank, an exhaust pipe, an exhaust tank, or the like of a biomass plant, a waste treatment plant, or a chemical plant. This allows both dinitrogen monoxide and methane to be procured from a common location. In many cases, most of the gas to be treated is air, and a proportion of each of dinitrogen monoxide and the hydrocarbon in the gas to be treated is 5 vol% or less. However, the decomposition method according to the present invention can decompose even a low-concentration gas to be treated having a concentration of such as 5 vol% or less. The gas to be treated may have a concentration of 1 vol% or less.

The same applies to hydrocarbons other than methane.

### [First modification]

A first modification of the first embodiment will be described. Hereinafter, matters different from the first embodiment will be mainly described, and description of matters common to the first embodiment will be omitted. The same applies to modifications described later and second and later embodiments.

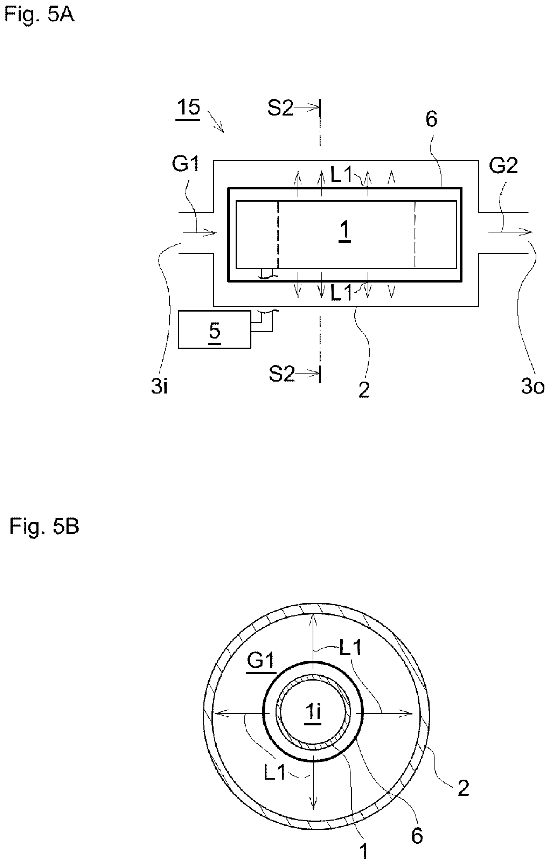

Fig. 5A shows a gas decomposition device 15 of the first modification. Fig. 5B is a cross-sectional view taken along line S2-S2 of Fig. 5A. As shown in Figs. 5A and 5B, the first light source 1 is disposed in the chamber 2 of the gas decomposition device 15. The first light source 1 is covered with an ultraviolet transmissive tube 6. The ultraviolet transmissive tube 6 transmits the first light L1 emitted from the first light source 1. If the first light source 1 is not covered with the ultraviolet transmissive tube 6, the first light source 1 can be exposed to the gas G1, resulting in adhesion of a solid component (e.g., a carbide) of the gas G1 to the surface of the arc tube of the first light source 1. When the first light source 1 is covered with the ultraviolet transmissive tube 6, the solid component of the gas G1 does not adhere to the first light source 1. When a solid component has adhered to the ultraviolet transmissive tube 6 and a reduction in irradiance is feared, the ultraviolet transmissive tube 6 may be replaced with an ultraviolet transmissive tube that no such a solid component has adhered to. The ultraviolet transmissive tube 6 may be regularly replaced. An inside of the ultraviolet transmissive tube 6 may be filled with nitrogen.

The ultraviolet transmissive tube 6 may be made of, for example, quartz glass. The ultraviolet transmissive tube 6 may cover the first light source 1 wholly or not wholly. The ultraviolet transmissive tube 6 may be configured so as to cover at least the arc tube of the first light source 1.

### [Second modification]

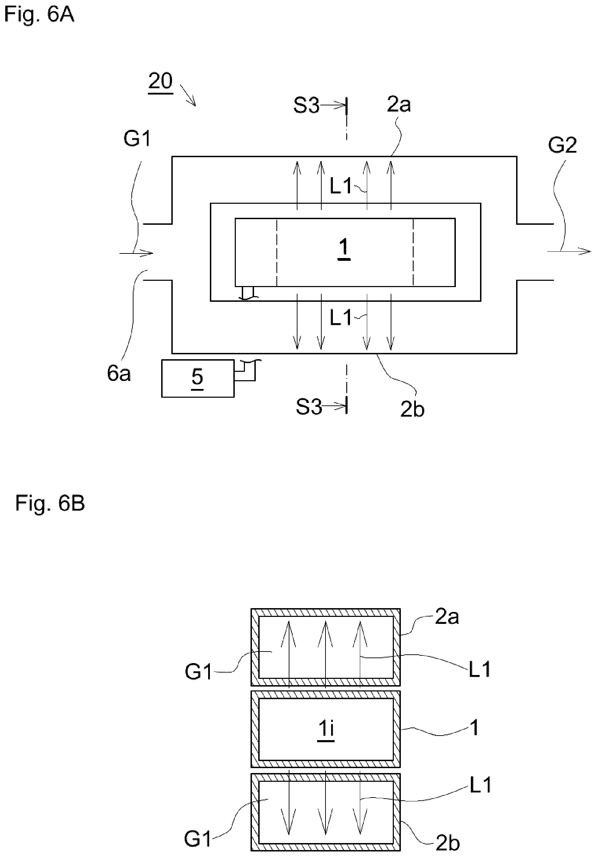

Fig. 6A shows a gas decomposition device 20 of a second modification. Fig. 6B is a cross-sectional view taken along line S3-S3 of Fig. 6A. As shown in Figs. 6A and 6B, the gas decomposition device 20 includes a first chamber 2a and a second chamber 2b that are made by branching a gas flow path into two. The first light source 1 is disposed outside the first chamber 2a and the second chamber 2b. Because the first light source 1 is outside the chamber (2a, 2b), a solid component of the gas G1 does not adhere to the first light source 1, and the first light source 1 can be readily subjected to maintenance, inspection, and replacement.

In the gas decomposition device 20, the first chamber 2a and the second chamber 2b are disposed such that the first light source 1 is put between the first and the second chambers. The first light L1 from the first light source 1 can be guided to the first and the second chambers 2a and 2b. The first light source 1, the first chamber 2a, and the second chamber 2b of the present embodiment each have a flat rectangular cross section. The first light L1 emitted from the first light source 1 travels a short distance outside each of the chambers (2a, 2b). This renders an amount of attenuation of the first light L1 small and helps the first light L1 to reach the chambers (2a, 2b) evenly.

It is more preferable that a space between the first light source 1 and each of the first and the second chambers 2a and 2b be filled with a gas, such as nitrogen gas, that is less likely to be absorbed by the first light L1 from the first light source 1. This helps to suppress absorption of the first light L1 outside the chambers (2a, 2b).

In the present embodiment, the chambers (2a, 2b) are constituted of a quartz glass tube that transmits the first light L1. However, not all the housings constituting the chambers (2a, 2b) may be made of the ultraviolet light transmitting material. At least a portion of the chamber required to transmit the first light L1 is preferably made of the ultraviolet light transmitting material such as quartz glass. The gas decomposition device 20 may include three or more chambers that are made by branching a gas flow path into three or more.

### [Third modification]

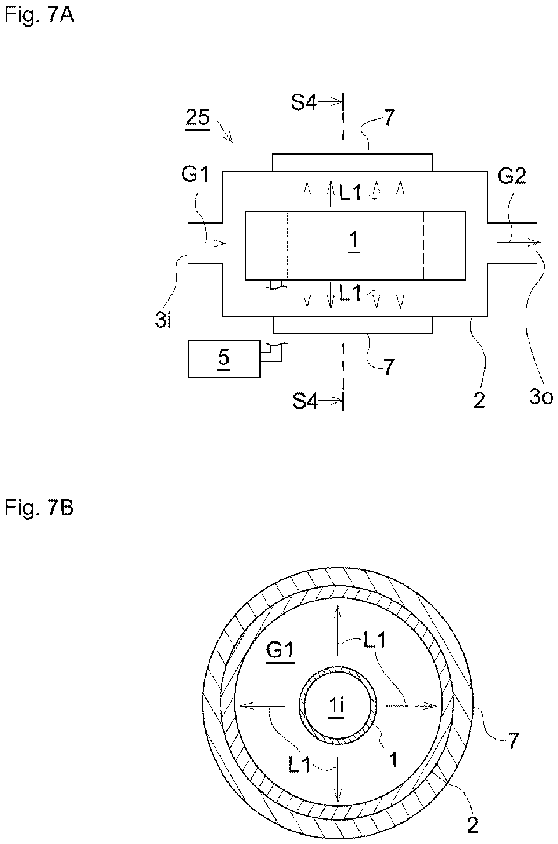

Fig. 7A shows a gas decomposition device 25 of a third modification. Fig. 7B is a cross-sectional view taken along line S4-S4 of Fig. 7A. As shown in Figs. 7A and 7B, the gas decomposition device 25 includes a heater 7 wrapped around an outside of the chamber 2 that has a cylindrical shape. The first light source 1 is disposed in the chamber 2.

As described above, an increase in the temperature of the gas G1 contributes to efficient decomposition and decreased generation of NOx. In the first embodiment described above, the gas G1 is heated by heat radiated from the excimer lamp. In addition, as in the gas decomposition device 25 of the present modification, the heater 7 may be disposed in a gas decomposition device to heat the gas G1. The heater 7 of the present embodiment is a sheathed heater designed to convert electric energy into heat and heat the gas. Preferably, the electric energy is renewable energy.
The heater 7 disposed decomposes ozone and thus has a secondary effect of lowering emissions of ozone into the atmosphere.

The heater 7 may constitute fluid heating through a heat medium flow path or a heat pipe. The heater 7 may be disposed upstream of the first light source 1 to guide the gas G1 heated at high temperature to the gas supply port 3i. The heater 7 may be sunlight or a fluid heated by sunlight.

### <Second embodiment>

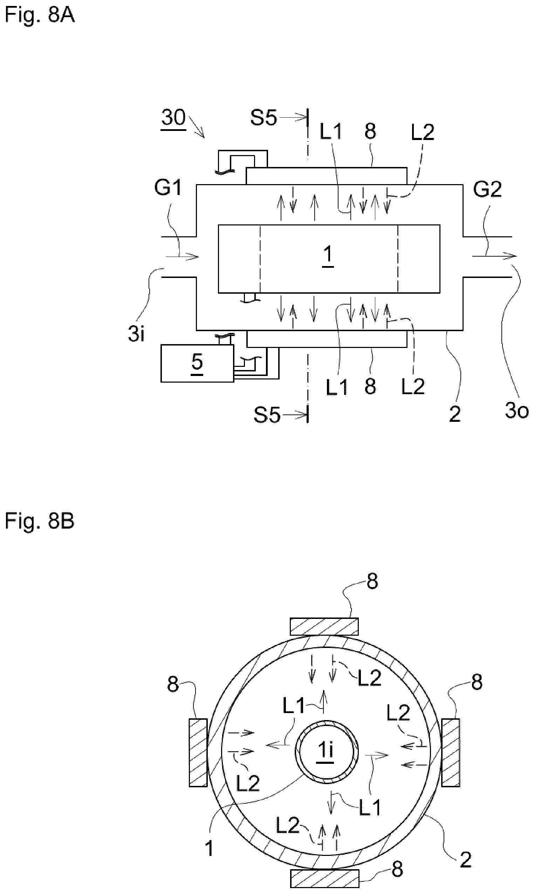

Fig. 8A shows a second embodiment. Fig. 8B is a cross-sectional view taken along line S5-S5 of Fig. 8A. A gas decomposition device 30 of the present embodiment includes a plurality of second light sources 8. The plurality of the second light sources 8 emit second light L2 toward a chamber 2. In the present specification, the second light L2 emitted from the second light sources 8 is indicated, for example, by broken arrows directed outward from the second light sources 8. Preferably, the second light sources 8 are each disposed such that a space to be irradiated with the second light L2 overlaps a space to be irradiated with first light L1.

A wavelength of the second light L2 emitted from the second light sources 8 differs from a wavelength of the first light L1 emitted from the first light source 1. The wavelength of the second light L2 is longer than that of the first light L1. The second light L2 generates O(¹D) or O(³P) from O₃ as represented by the following formulas (21) and (22).

O₃ + hv (≤ 411 nm) → O (¹D) + O₂ ... (21)

O₃ + hv (≤ 1180 nm) → O (³P) + O₂ ... (22)

The formulas (21) and (22) show that an activity state of the generated oxygen atom differs depending on the wavelength of the second light L2. When the second light L2 is ultraviolet light having a wavelength of less than 411 nm, O(¹D), which is highly active, is generated. O(¹D) generated by the formula (21) is used for decomposition of N₂O (refer to the formulas (2) and(3)), decomposition of a hydrocarbon (refer to the formulas (15) and (16)), and generation of the hydroxy radical (refer to the formula (20)).

When the second light L2 is infrared light or visible light having a wavelength of less than 1180 nm, O(³P), which is less active, is generated. O(³P) generated is used for decomposition of a hydrocarbon (refer to the formula (17)) and nitration of NOx (refer to the formulas (9) and (11)). In this way, by irradiation of a gas G1 with the second light L2, decomposition of N₂O and CH₄ by the first light L1 is promoted.

The second light sources 8 may each be any of an excimer lamp, a solid state light source such as an LED or an LD, a low-pressure mercury lamp, and a fluorescent lamp. The second light sources 8 may be lamps that emit ultraviolet light, visible light, or infrared light. When the second light sources 8 are lamps that emit infrared light, heating the gas makes it possible to produce an effect of promoting decomposition reaction, as described in the third modification of the first embodiment. If a heater 7 is disposed to add heating, the generation of O(³P) by infrared light caused by the disposed heater 7 makes it possible to produce the effect of promoting decomposition reaction.

As shown in Figs. 8A and 8B, in a case where one of the first light source 1 and the second light sources 8 is disposed inside the chamber 2, it is preferable to dispose the first light source 1 inside the chamber 2. This is because the light emitted from the first light source 1 has a wavelength shorter than that of the light emitted from the second light sources 8, and thus the light emitted from the first light source 1 is less likely to be transmitted through the chamber 2 as compared to the light emitted from the second light sources 8. In order to increase transmittance to the light emitted form the first light source 1, a material such as quartz glass needs to be selected for the chamber 2 to have high transmittance to even the light having a short wavelength. However, when the first light source 1 is disposed inside the chamber 2, the light emitted form the first light source 1 does not need to be transmitted through the chamber 2. This makes it possible to widen the choices of materials that can be used for the chamber 2.

### <Third embodiment>

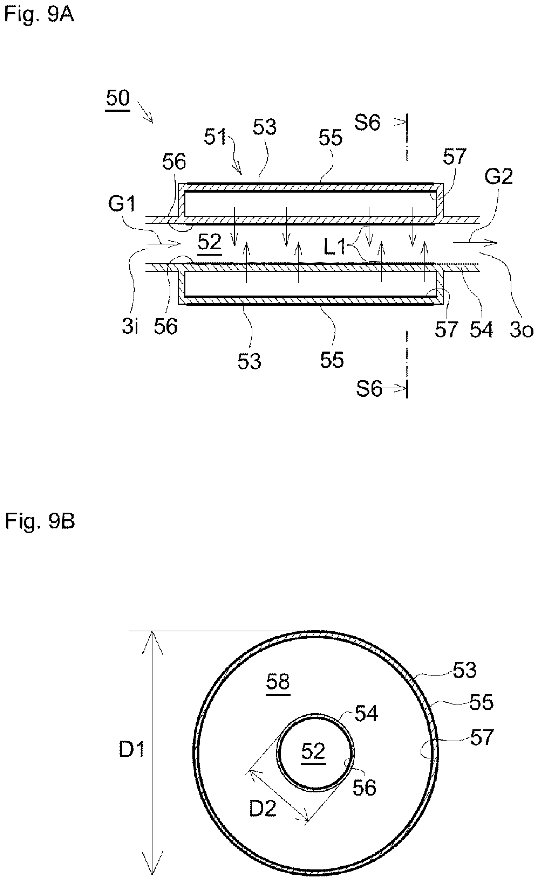

Fig. 9A shows a gas decomposition device 50 of a third embodiment. Fig. 9B is a cross-sectional view taken along line S6-S6 of Fig. 9A. As shown in Figs. 9A and 9B, the gas decomposition device 50 includes a first light source 51 and an inside chamber 52. The inside chamber 52 is located inside the first light source 51. The first light source 51 has a double-tube structure in which an inner tube 54 is disposed inside an outer tube 53. In the first light source 51, an outside electrode 55 is disposed in contact with an outer wall surface of the outer tube 53, and an inside electrode 56 is disposed in contact with an inner wall surface of the inner tube 54. A space between the outer tube 53 and the inner tube 54 is filled with a light-emitting gas such as xenon gas and is sealed. Through application of a voltage between the outside electrode 55 and the inside electrode 56, a discharge space 58 for the light-emitting gas is formed (refer to Fig. 9B), and first light L1 is radiated (refer to Fig. 9A). Preferably, the inside electrode 56 and the outside electrode 55 have a mesh shape.

The inner tube 54 is made of a material, such as quartz, that transmits the light-emitting gas. The light-emitting gas is transmitted through the inner tube 54 to reach the inside chamber 52. The gas decomposition device 50 has a gas supply port 3i on one end of the inside chamber 52 and a gas discharge port 3o on an other end of the inside chamber 52. The gas decomposition device continues to supply a gas G1 from the gas supply port 3i into the inside chamber 52, irradiate the gas G1, a gas to be treated, with the first light L1 emitted from the first light source 1, and discharge a gas G2 produced after irradiation with the light from the gas discharge port 3o. This allows N₂O and a hydrocarbon in the gas G1 to be continuously decomposed.

The outer tube 53 is made of, for example, quartz. The gas decomposition device 50 includes a reflective film 57 formed on an inner wall surface of the outer tube 53 to reflect the first light L1. Although the light-emitting gas can be radiated outward from the outer tube 53, the reflective film 57 formed on the inner wall surface of the outer tube 53 causes the first light L1 that otherwise travels outward from the outer tube 53 to reflect inward. This increases intensity of the light in the inside chamber 52.

In the gas decomposition device 50, an outside diameter D1 of the outer tube 53 is preferably 10 mm or more and 50 mm or less, and more preferably, 20 mm or more and 40 mm or less. An outside diameter D2 of the inner tube 54 is preferably 2 mm or more and 20 mm or less, and more preferably, 4 mm or more and 10 mm or less.

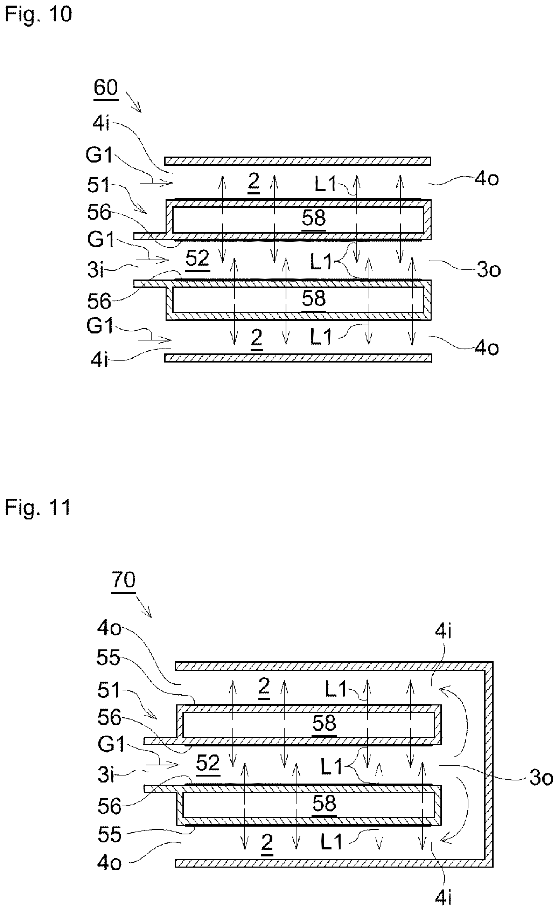

Fig. 10 shows a gas decomposition device 60 of a first modification of the third embodiment. Differences between the gas decomposition device 60 and the gas decomposition device 50 of the third embodiment are that the gas decomposition device 60 does not have the reflective film 57 but has an outside chamber 2 outside the outer tube 53. The gas decomposition device 60 also has a gas supply port 4i on one end of the outside chamber 2 and a gas discharge port 4o on an other end of the outside chamber 2. The gas decomposition device supplies the gas G1 from the gas supply port 4i into the outside chamber 2 and irradiates the gas G1, a gas to be treated, with the first light L1 emitted from the first light source 1. The gas decomposition device 60 is designed to treat the gas G1 by both the inside chamber 52 and the outside chamber 2 and thus can treat a large amount of the gas, leading to improved efficiency of use of the first light L1.

Fig. 11 shows a gas decomposition device 70 of a second modification of the third embodiment. A difference between the gas decomposition device 60 and the gas decomposition device 60 of the modification of the third embodiment is that the gas discharge port 3o of the inside chamber 52 is connected with the gas supply port 4i of the outside chamber 2. The gas G2 treated in the inside chamber 52 is treated again in the outside chamber 2. This makes it possible to treat the gas to be treated more effectively, leading to improved efficiency of use of the first light L1.

The present modification shows an embodiment in which the gas first passes through the inside chamber 52 and then passes through the outside chamber 2. However, the gas may first pass through the outside chamber 2 and then pass through the inside chamber 52.

### <Fourth embodiment>

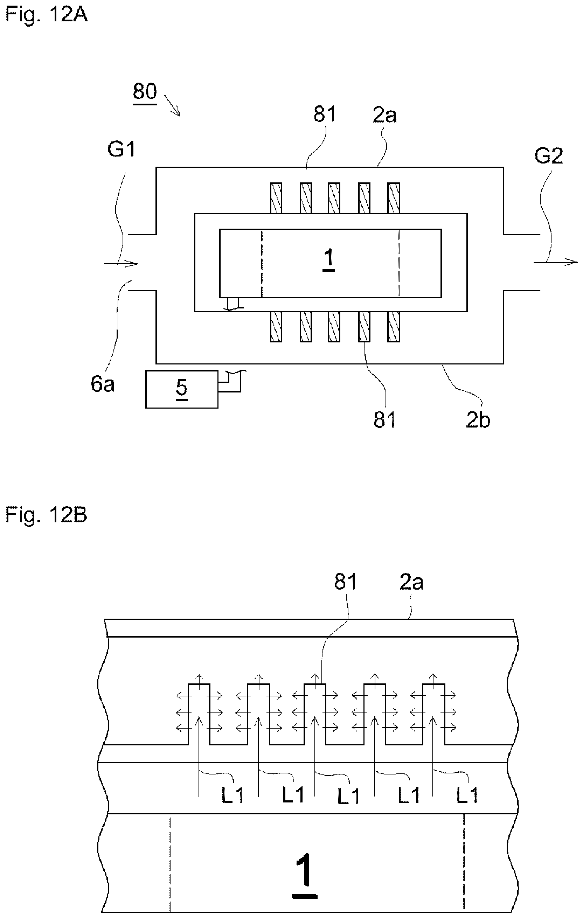

Fig. 12A shows a gas decomposition device 80 of a fourth embodiment. The gas decomposition device 80 has a light guide 81 in an internal space of an outside chamber (2a, 2b) to allow light reaching the outside chamber (2a, 2b) to be transmitted through the light guide. The gas decomposition device has a gap between the outside chamber (2a, 2b) and a first light source 1 and thus has a gap between the light guide 81 and the first light source 1. The light guide 81 is formed in contact with a tube wall of the outside chamber (2a.2b). Preferably, in the gap, a gas (e.g., nitrogen gas) that is less likely to absorb first light L1 is a main component.

Fig. 12B is an enlarged view of the light guide 81 and its surroundings in Fig. 12A. With reference to Fig. 12B, a function of the light guide 81 will be described. The light guide 81 guides the first light L1 into an inside thereof and diffuses the first light L1 from a surface of the light guide 81. This leads to an increased area on which the first light L1 comes into contact with a gas G1 and improves effectiveness of photoreaction.

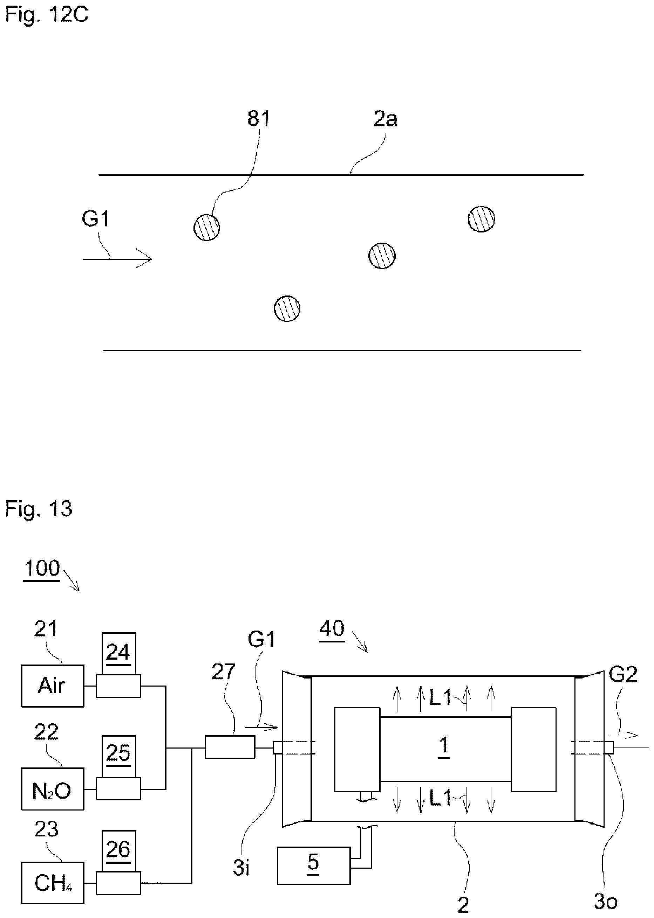

Fig. 12C is a top view of the light guide 81 and is specifically a drawing of the light guide 81 in a first chamber 2a as viewed in a direction opposite the direction in which the first light L1 is emitted from the first light source 1. In the present embodiment, a portion of the light guide 81 has a circular cylinder shape, and a plurality of portions of the light guide are disposed in the first chamber 2a. The portions of the light guide 81 may be disposed regularly or irregularly. The portion of the light guide 81 may have any pillar shape (e.g., a polygonal or elliptic cylinder shape) other than the circular cylinder shape. The light guide 81 may have a plate shape. The light guide 81 may be disposed in an inside chamber.

The embodiments of the gas decomposition method and the gas decomposition device and the modifications thereof have been described above. The above embodiments are merely examples of the present invention, and should not be construed to limit the present invention. Various changes or improvements can be added to the above embodiments, or the above embodiments or modifications can be combined without departing from the gist of the present invention.

### EXAMPLE

Experimental equipment 100 shown in Fig. 13 was constructed. A gas decomposition device 40 was built in the experimental equipment 100. The experimental equipment 100 included an air supply source 21, a N₂O supply source 22, and a CH₄ supply source 23. The experimental equipment 100 further included mass flow controllers (24, 25, 26) to control amounts supplied from the respective air supply source 21, the N₂O supply source 22, and the CH₄ supply source 23 and a mass flow meter 27 to detect an amount of a gas to be treated in which air, N₂O, and CH₄ are mixed together. A gas supply port 3i was connected to the air supply source 21, the N₂O supply source 22, and the methane supply source 23 via the mass flow meter 27 and the mass flow controllers (24, 25, 26).

The air supply source 21 was an air supply pipe at a plant. The supplied air contained a certain amount of moisture. The air included nitrogen, oxygen, and a small amount of carbon dioxide. The N₂O supply source 22 was a gas cylinder filled with N₂O, and the gas cylinder substantially contained only N₂O. The CH₄ supply source 23 was a gas cylinder filled with CH₄, and the gas cylinder substantially contained only CH₄.

Regarding the gas decomposition device 40, a first light source 1 was a xenon excimer lamp that was cylindrical and 800 mm in length. A chamber 2 was a cylindrical pipe having an inside diameter of 38 mm such that the first light source 1 was permitted to be disposed inside. Both sides of the pipe were sealed with sealing members that had either a gas inflow path or a gas outflow path. A power line connected to the first light source 1 passed through one of the sealing members. Lighting of the first light source 1 was controlled through the sealing member by a controller 5 that was located outside the chamber 2.

Three types of gas G1 were prepared, and a gas decomposition process was conducted by sending each of the three types of the gas G1 to the gas decomposition device 10.

A sample S1 was a gas in which 1000 ppm N₂O was added to air.

A sample S2 was a gas in which 1000 ppm CH₄ was added to air.

A sample S3 was a gas in which 1000 ppm N₂O and 1000 ppm CH₄ were added to air.

Table 1 shows components (except for the air) contained in the samples S1 to S3 of the gas G1.

**[Table 1]**

| Sample No. | N₂O Content (ppm) | CH₄ Content (ppm) |
|---|---|---|
| S1 | 1000 | 0 |
| S2 | 0 | 1000 |
| S3 | 1000 | 1000 |

Table 2 shows results of measured content of gas components of gas G2 discharged from a gas discharge port 3o of the gas decomposition device 40. Each gas component was measured by an FT-IR gas analyzer (model: MATRIX-5) manufactured by Bruker.

**[Table 2]**

| Sample No. | N₂O Content (ppm) | CH₄ Content (ppm) | CO₂ Content (ppm) | H₂O Content (ppm) | NO Content (ppm) | NO₂ Content (ppm) | HNO₃ Content (ppm) | O₃ Content (ppm) |
|---|---|---|---|---|---|---|---|---|
| S1 | 423 | 0 | 483 | 1645 | 93 | 226 | 55 | 0 |
| S2 | 0 | 0 | 1445 | 3678 | 0 | 0 | 0 | 964 |
| S3 | 476 | 0 | 1425 | 3614 | 0 | 0 | 197 | 578 |

Results with the sample S1 show the following points.
As a consequence of decomposition of N₂O by the gas decomposition device 40, N₂O decreased from 1000 ppm to 423 ppm. The decreased amount of N₂O was transformed into N₂ and O₂ as well as NOx (NO and NO2) and HNO₃. It is inferred that the H₂O content had been present since before decomposition. O₃ was supposed to be generated by the first light source 1, but the gas G2 did not contain O₃. A conceivable reason is that O₃ was consumed by a NOx cycle reaction.

Results with the sample S2 show the following points.
CH₄ was wholly oxidized and decomposed by the gas decomposition device 40, and CO₂, H₂O, and O₃ were generated. Regarding the H₂O and CO₂ content of each sample, air included in the samples S1 to S3 of the gas G1 before treatment contained H₂O and CO₂, and thus not all the H₂O and CO₂ content was generated by the decomposition reaction.

Results with the sample S3 show the following points.
The sample S3 was a sample in which CH₄ was added to the sample S1. It is considered that the added CH₄ hindered occurrence of a NOx cycle reaction consuming O₃ and that a sufficient quantity of O₃ and H₂O caused NOx, which remained in the sample S1, to be transferred into HNO₃. Since the added CH₄ was oxidized and decomposed and was transferred into CO₂ and H₂O, the gas G2 did not contain CH₄.

### DESCRIPTION OF REFERENCE SIGNS

- 1, 51: First light source
- 2: Chamber
- 2a: First chamber
- 2b: Second chamber
- 3i, 4i: Gas supply port
- 3o, 4o: Gas discharge port
- 5: Controller
- 6: Ultraviolet transmissive tube
- 7: Heater
- 8: Second light source
- 11: Discharge pipe
- 12: Container
- 10, 15, 20, 25, 30, 40, 50, 60, 70, 80: Gas decomposition device
- 81: Light guide
- 21: Air supply source
- 22: Dinitrogen monoxide supply source
- 23: CH₄ supply source
- 24, 25, 26: Mass flow controller
- 27: Mass flow meter
- 52: Inside chamber
- 53: Outer tube
- 54: Inner tube
- 55: Outside electrode
- 56: Inside electrode
- 57: Reflective film
- 58: Discharge space
- 81: Light guide
- 100: Experimental equipment
- G1: Gas (before treatment)
- G2: Gas (after treatment)
- L1: First light
- L2: Second light

## Claims

1. A gas decomposition method comprising irradiating a gas to be treated containing oxygen, dinitrogen monoxide, and a saturated hydrocarbon with first light having a main emission wavelength in a range of 160 nm or more and less than 200 nm to decompose the dinitrogen monoxide and the saturated hydrocarbon.

2. The gas decomposition method according to claim 1, wherein the saturated hydrocarbon is an alkane having 4 or less carbon atoms.

3. The gas decomposition method according to claim 1, wherein a temperature of the gas to be treated being irradiated with the first light is higher than the temperature of the gas to be treated before being collected.

4. The gas decomposition method according to claim 1, wherein the gas to be treated contains water.

5. The gas decomposition method according to claim 2, wherein the alkane primarily contains methane.

6. The gas decomposition method according to claim 5, wherein the methane occupies 20 vol% or more with respect to the dinitrogen monoxide.

7. The gas decomposition method according to any one of claims 1 to 6, comprising irradiating the gas to be treated with second light having a main emission wavelength in a range of 200 nm or more and less than 1180 nm.

8. The gas decomposition method according to claim 7, wherein the second light has a main emission wavelength in a range of 780 nm or more and less than 1180 nm.

9. The gas decomposition method according to any one of claims 1 to 7, comprising generating nitric acid from the decomposed gas to be treated.

10. A gas decomposition device comprising:
a chamber to supply a gas to be treated containing oxygen, dinitrogen monoxide, and a saturated hydrocarbon; and
a first light source to irradiate the chamber with first light having a main emission wavelength in a range of 160 nm or more and less than 200 nm,
wherein the gas decomposition device decomposes the dinitrogen monoxide and the saturated hydrocarbon.

11. The gas decomposition device according to claim 10, wherein the saturated hydrocarbon is an alkane having 4 or less carbon atoms.

12. The gas decomposition device according to claim 11, wherein the chamber has a connection port connected to a space in which a gas containing 5 vol% or less of the dinitrogen monoxide and 5 vol% or less of the alkane is present.

13. The gas decomposition device according to any one of claims 10 to 12, wherein the chamber is an outside chamber surrounding the first light source, and
the gas decomposition device supplies the gas to be treated to the outside chamber.

14. The gas decomposition device according to claim 13, wherein the gas to be treated supplied to the outside chamber does not come into contact with the first light source.

15. The gas decomposition device according to claim 13, comprising a second light source external to the outside chamber to irradiate the gas to be treated with light having a main emission wavelength in a range of 200 nm or more and less than 1180 nm, the gas to be treated being located between the outside chamber and the first light source.

16. The gas decomposition device according to any one of claims 10 to 12, wherein the chamber is an inside chamber located inside the first light source, and
the gas decomposition device supplies the gas to be treated to an interior of the inside chamber.

17. The gas decomposition device according to any one of claims 10 to 12, wherein the chamber includes both an inside chamber located inside the first light source and an outside chamber surrounding the first light source, and
the gas decomposition device supplies the gas to be treated to an interior of the inside chamber and a space between the outside chamber and the first light source.

18. The gas decomposition device according to claim 17, wherein the gas to be treated passes through one of the interior of the inside chamber and the space between the outside chamber and the first light source, and subsequently passes through an other of the interior of the inside chamber and the space between the outside chamber and the first light source.

19. The gas decomposition device according to any one of claims 10 to 12, comprising a light guide in an internal space of the chamber, the light guide being configured to transmit light reaching the chamber.

20. The gas decomposition device according to claim 19, comprising a gap between the light guide and the first light source.

21. The gas decomposition device according to any one of claims 10 to 20, wherein the first light source is an excimer lamp.
